# EUROPÄISCHE PATENTSCHRIFT

(11) **EP 4 342 055 B1**
(45) Veröffentlichungstag und Bekanntmachung des Hinweises auf die Patenterteilung: **10.06.2026**
(21) Anmeldenummer: 22724643.6
(22) Anmeldetag: 25.04.2022
(51) Int. Cl.: H02K 1/24, H02K 19/14, H02K 17/20

(54) **ELEKTROMOTOR MIT ROTORWELLE UND BLECHPAKET**
ELECTRIC MOTOR HAVING ROTOR SHAFT AND LAMINATED CORE
MOTEUR ÉLECTRIQUE COMPRENANT UN ARBRE DE ROTOR ET UN NOYAU FEUILLETÉ

(30) Priorität: 19.05.2021 CN 202110544108; 14.07.2021 DE 102021003629
(43) Veröffentlichungstag der Anmeldung: 27.03.2024
(73) Patentinhaber: SEW-EURODRIVE GmbH & Co. KG, 76646 Bruchsal (DE)
(72) Erfinder: JINCHANG, Li, Tianjin (CN)
(86) Internationale Anmeldenummer: PCT/EP2022/025176
(87) Internationale Veröffentlichungsnummer: WO 2022/242901

(56) Entgegenhaltungen:
- EP-A1- 3 413 439
- CN-U- 210 608 878
- GB-A- 940 997
- JP-A- 2009 077 458
- US-A1- 2017 179 801

## Beschreibung

Die Erfindung betrifft ein Elektromotor mit Rotorwelle und Blechpaket.

Aus der EP 3788701 A1 ist ein Einzelblech eines Rotors mit Schlitzgruppen zur Bildung von Reluktanzpolen bekannt.

**Aus der** EP 3 413 439 A1 **ist ein Rotor eines Elektromotors bekannt.**

**Aus der** US 2019 / 0 229 568 A1 **ist ein Synchronreluktanzmotor bekannt.**

**Aus der** US 2015 / 0 162 788 A1 **ist ein Rotor für einen Reluktanzmotor bekannt.**

**Aus der** JP 2009 - 77 458 A **ist ein laminierter Rotor eines Reluktanzmotors bekannt.**

**Aus der** JP 2003 - 52 186 A **ist ein Verfahren zum Betreiben eines Reluktanzmotors bekannt.**

**Aus der** US 2019 / 0 238 035 A1 **ist ein Synchronreluktanzmotor bekannt.**

**Aus der** CN 1 12 671 127 A **ist ein Rotorblech für einen Reluktanzmotor bekannt.**

**Aus der** JP 2011 - 193 627 A **ist ein Rotor eines Elektromotors bekannt.**

**Aus der** EP 3 672 026 A1 **ist ein asynchrones Starten eines Synchronreluktanzmotors bekannt.**

**Aus der** JP 2003 - 259 615 A **ist ein Reluktanzmotor bekannt.**

**Aus der** WO 2018 / 083 639 A1 **ist ein selbststartender Synchronreluktanzmotor bekannt.**

**Aus der** GB 940 997 A **als nächstliegender Stand der Technik ein Elektromotor bekannt.**

**Aus der** US 2017/179801 A1 **ist ein Reluktanzrotor bekannt.**

**Aus der** CN 210 608 876 U **ist Rotor eines Elektormotors bekannt.**

Der Erfindung liegt daher die Aufgabe zugrunde, Elektromotor mit Rotorwelle und Blechpaket weiterzubilden, wobei ein einfaches Betreiben erreichbar sein soll.

Erfindungsgemäß wird die Aufgabe bei dem Elektromotor mit Rotorwelle und Blechpaket nach den in Anspruch 1 angegebenen Merkmalen gelöst.

Wichtige Merkmale der Erfindung bei dem Elektromotor mit Rotorwelle und Blechpaket sind,
dass das Blechpaket auf die Rotorwelle aufgesteckt ist,
wobei das Blechpaket, insbesondere an seinem auf die Drehachse der Rotorwelle bezogen radial äußeren Umfang, in Umfangsrichtung voneinander gleichmäßig beabstandete Nuten zur Aufnahme von Kurzschlussstäben eines Kurzschlusskäfigs aufweist,
wobei das Blechpaket, insbesondere zur Ausbildung von Reluktanzpolen, in bezogen auf die Drehachse der Rotorwelle in Umfangsrichtung voneinander regelmäßig beabstandete Schlitzgruppen aufweist,
wobei jede Schlitzgruppe mindestens drei Schlitze aufweist,
wobei jeder Schlitz kreisbogenförmig oder ellipsenbogenförmig ausgeführt ist,
wobei die Schlitze einer jeweiligen Schlitzgruppe konzentrisch zueinander ausgerichtet sind.

Von Vorteil ist dabei, dass Reluktanzpole in einfacher Weise ausbildbar sind. Denn durch die erfindungsgemäße Ausführung der Schlitze ist eine Egalisierung der Reluktanzpole erreichbar und somit ein gleichmäßigerer, also egalisierterer Verlauf des Drehmoments bei der Drehbewegung.

Bei einer vorteilhaften Ausgestaltung beträgt die Anzahl der Schlitzgruppen vier. Von Vorteil ist dabei, dass mit geringem Aufwand ein netzsynchroner Betrieb ermöglicht ist.

Bei einer vorteilhaften Ausgestaltung wird bezogen auf den Mittelpunkt, insbesondere Kreismittelpunkt, des den jeweiligen Kreisbogen enthaltenden Kreises jeder Schlitz von einem ersten Kreisbogen radial innen berandet und von einem zweiten Kreisbogen radial außen berandet. Von Vorteil ist dabei, dass ein möglichst effizienter Feldverlauf im Blechpaket bewirkbar ist.

Bei einer vorteilhaften Ausgestaltung weisen alle, die Kreisbögen aller Schlitze enthaltenden Kreise denselben, insbesondere gleichen und/oder identischen, Mittelpunkt, insbesondere Kreismittelpunkt, Ellipsenmittelpunkt oder Ellipsen-Brennpunkt, auf, insbesondere also konzentrisch zueinander angeordnet sind. Von Vorteil ist dabei, dass ein Reluktanzpol stark ausprägbar ist.

**Erfindungsgemäß** ist die auf den Mittelpunkt, insbesondere Kreismittelpunkt, Ellipsenmittelpunkt oder Ellipsen-Brennpunkt, bezogene radiale Ausdehnung des jeweiligen Schlitzes
- in Umfangsrichtung um den Mittelpunkt, insbesondere Kreismittelpunkt, Ellipsenmittelpunkt oder Ellipsen-Brennpunkt, herum konstant und/oder
- unabhängig vom Umfangswinkel um den Mittelpunkt, insbesondere Kreismittelpunkt, Ellipsenmittelpunkt oder Ellipsen-Brennpunkt, herum.

Von Vorteil ist dabei, dass eine effiziente Feldführung ermöglicht ist.

Bei einer vorteilhaften Ausgestaltung nimmt die auf den Mittelpunkt, insbesondere Kreismittelpunkt, Ellipsenmittelpunkt oder Ellipsen-Brennpunkt, bezogenen radiale Ausdehnung des jeweiligen Schlitzes mit zunehmendem radialen Abstand vom Mittelpunkt, insbesondere Kreismittelpunkt, Ellipsenmittelpunkt oder Ellipsen-Brennpunkt, zu. Von Vorteil ist dabei, dass die Feldlinien bündelbar sind und somit ein hochwirksamer Reluktanzpol ausbildbar ist.

**Erfindungsgemäß** nimmt der bezogen auf den Mittelpunkt, insbesondere Kreismittelpunkt, Ellipsenmittelpunkt oder Ellipsen-Brennpunkt, radiale Abstand zwischen jeweils zwei zueinander nächstbenachbarten Schlitzen einer Schlitzgruppe mit zunehmendem Abstand zum Mittelpunkt, insbesondere Kreismittelpunkt, Ellipsenmittelpunkt oder Ellipsen-Brennpunkt, zu. Von Vorteil ist dabei, dass eine effiziente Feldführung ermöglicht ist. 1

Bei einer vorteilhaften Ausgestaltung ist jeder Schlitz an seinem jeweiligen entgegen der Umfangsrichtung oder in Umfangsrichtung angeordneten Ende von einer der Nuten mit einem Minimalabstand beabstandet, wobei der Wert des Minimalabstandes für alle Enden aller Schlitze derselbe Wert ist, insbesondere also identisch ist. Von Vorteil ist dabei, dass eine effiziente Feldführung ermöglicht ist.

**Erfindungsgemäß** ist ein Kurzschlusskäfig mit dem Blechpaket als Verbundteil ausgebildet.

Von Vorteil ist dabei, dass eine kostengünstige Herstellung ermöglicht ist.

Bei einer vorteilhaften Ausgestaltung weist der Stator des Elektromotors eine Drehstromwicklung auf. Von Vorteil ist dabei, dass der Elektromotor als Asynchronmotor betreibbar ist und dennoch ein netzsynchroner Betrieb infolge der durch die Reluktanzpole erzeugten Reluktanzeigenschaften des Motors ermöglicht.

Bei einer vorteilhaften Ausgestaltung sind die Schlitzgruppen zueinander identisch ausgebildet, insbesondere also durch Drehung um die Drehachse der Rotorwelle miteinander in Deckung bringbar sind. Von Vorteil ist dabei, dass ein vibrations- und schwankungsarmer Drehbetrieb ermöglicht ist.

Bei einer vorteilhaften Ausgestaltung weisen die Schlitzgruppen denselben Radialabstand zur Drehachse der Rotorwelle auf. Von Vorteil ist dabei, dass ein ruhiger Drehbetrieb ermöglicht ist.

Die Erfindung wird nun anhand von schematischen Abbildungen näher erläutert:

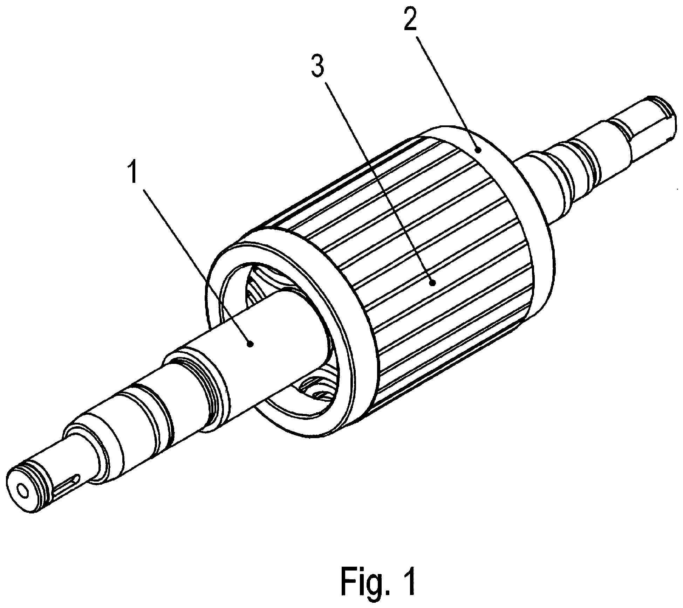

In der Figur 1 ist der Rotor eines erfindungsgemäßen Elektromotors in Schrägansicht dargestellt.

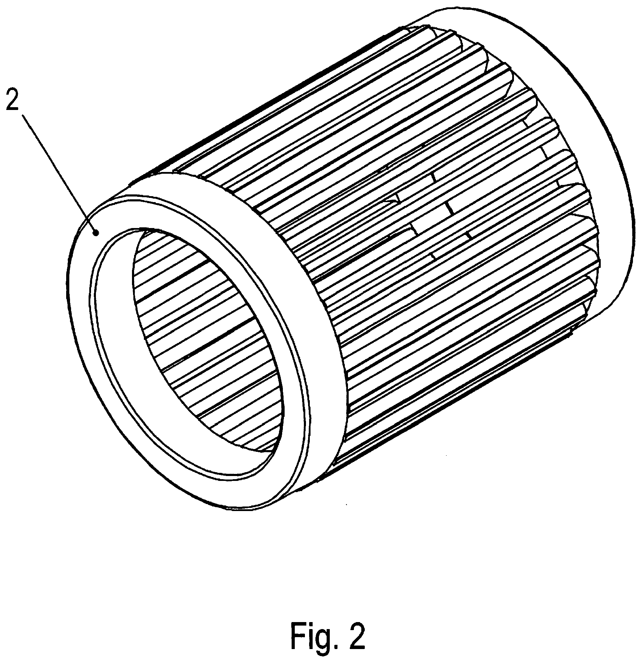

In der Figur 2 ist ein Kurzschlusskäfig 2 des Rotors in Schrägansicht dargestellt.

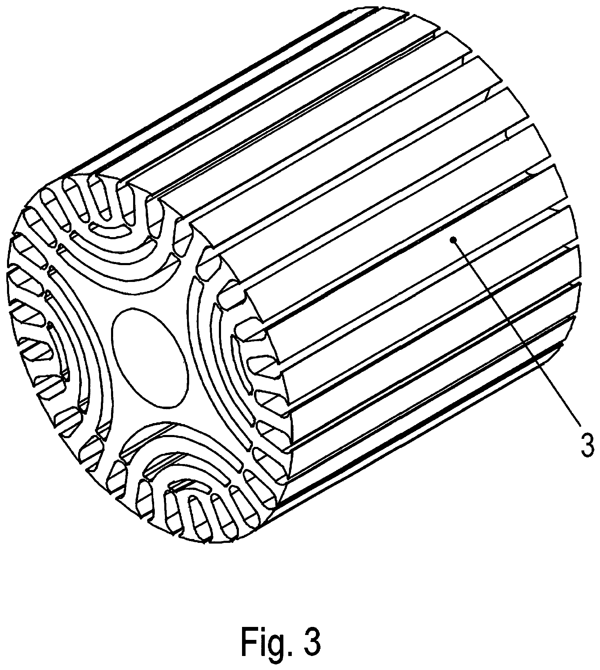

In der Figur 3 ist ein Blechpaket 3 des Rotors in Schrägansicht dargestellt.
In der Figur 4 das Blechpaket 3 in Draufsicht dargestellt.

Wie in den Figuren gezeigt, weist der Rotor des Elektromotors eine Rotorwelle 1 auf, welche in ein Blechpaket 3 eingesteckt ist, das als Verbundteil mit einem Kurzschlusskäfig 2 ausgeführt ist. Dabei sind die axial beidseitig angeordneten Kurzschlussringe des Kurzschlusskäfigs 2 durch Umspritzen insbesondere mit Aluminium und/oder Kupfer hergestellt.

Die die Kurzschlussringe verbindenden Kurzschlussstäbe des Kurzschlusskäfigs sind ebenfalls beim Spritzen hergestellt und füllen axial gerichtete Nuten 41 des Blechpaketes 3 auf.

Das Blechpaket 3 besteht aus in axialer Richtung gestapelt angeordneten Einzelblechen.

Jedes der Einzelbleche ist vorzugsweise als Stanzteil ausgeführt.

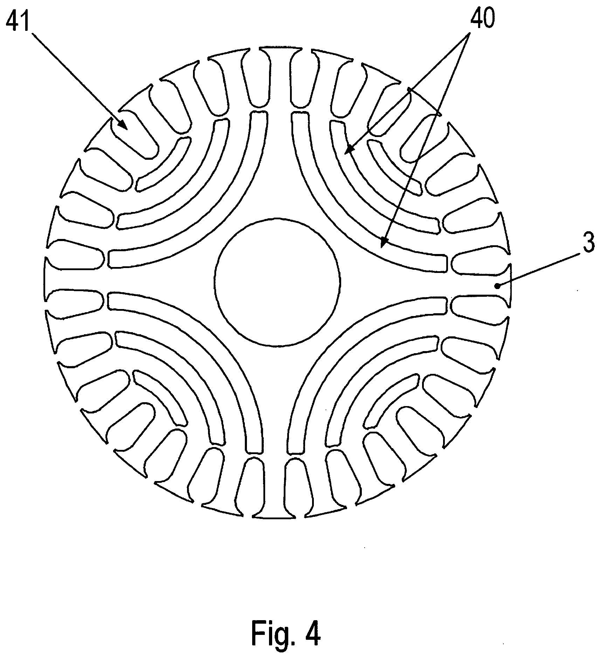

Wie in Figur 4 gezeigt, weist jedes Einzelblech des Blechpakets an seinem äußeren Umfang Nuten 41 auf, die alle auf dem selben Radialabstand zur Drehachse der Rotorwelle 1 angeordnet sind und in Umfangsrichtung voneinander regelmäßig beabstandet sind.

Radial innerhalb der Nuten 41 sind vier in Umfangsrichtung voneinander regelmäßig beabstandete Schlitzgruppen vorgesehen zur Bildung von vier Reluktanzpolen, so dass der mit dem Kurzschlusskäfig nach dem Prinzip des Asynchronmotors betriebene Elektromotor zusätzlich Reluktanzpole aufweist und daher ein Netzsynchroner Betrieb, insbesondere ohne Schlupf, ermöglicht wird.

Jede Schlitzgruppe weist drei Schlitze auf, die kreisabschnittsförmig gebogen ausgeformt sind und dabei die entsprechenden Kreise der jeweiligen Schlitzgruppe zueinander konzentrisch ausgerichtet sind.

In Umfangsrichtung entlang des dem jeweiligen Schlitz zugeordneten Kreises weist jeder Schlitz eine konstante radiale Ausdehnung auf, wobei die radiale Ausdehnung auf den Mittelpunkt des ihm zugeordneten Kreises bezogen ist.

Allerdings nimmt die radiale Ausdehnung des jeweiligen Schlitzes mit zunehmendem Abstand vom Mittelpunkt zu. Somit ist eine Vergleichmäßigung und/oder Egalisierung der Reluktanzpolstärke in Umfangsrichtung beim jeweiligen Reluktanzpol erreichbar.

Der Betrag des radialen Abstands zwischen zwei in radialer Richtung zueinander nächstbenachbarten Schlitzen der jeweiligen Schlitzgruppe ist stets gleich, insbesondere also unabhängig vom Abstand zum Mittelpunkt zu.

Jede Schlitzgruppe weist drei konzentrisch angeordnete Schlitze auf.

Jeder Schlitz 40 ist an seinem jeweiligen entgegen der Umfangsrichtung oder in Umfangsrichtung angeordneten Ende von einer jeweiligen der Nuten 41 mit einem Minimalabstand beabstandet, wobei der Wert des Minimalabstandes für alle Enden aller Schlitze den identisch ist.

Der Stator des Elektromotors weist vorzugsweise eine Drehstromwicklung auf. Somit ist ein magnetisches Drehfeld erzeugbar, der den Betrieb des Elektromotors als Drehstrommotor ermöglicht.

Bei weiteren erfindungsgemäßen Ausführungsbeispielen weist jede Schlitzgruppe mehr als drei Schlitze auf.

Bei weiteren erfindungsgemäßen Ausführungsbeispielen nimmt der Betrag des radialen Abstands zwischen zwei in radialer Richtung zueinander nächstbenachbarten Schlitzen der jeweiligen Schlitzgruppe mit zunehmendem Abstand vom Mittelpunkt zu. Somit ist eine weiter verbesserte Vergleichmäßigung und/oder Egalisierung der Reluktanzpolstärke in Umfangsrichtung beim jeweiligen Reluktanzpol erreichbar.

Bei weiteren erfindungsgemäßen Ausführungsbeispielen ist statt der genannten Kreisbogenform der Schlitze 40 eine ellipsenbogenförmige Ausformung der Schlitze ausgeführt, wobei statt des Mittelpunktes des jeweiligen Kreises der Mittelpunkt der jeweiligen Ellipse verwendet wird. Dies verbessert zwar die Vergleichmäßigung der Reluktanzpolstärke in Abhängigkeit vom Umfangswinkel um den Brennpunkt der Ellipsen, jedoch sind dann keine entlang des bogenförmigen Verlaufs der Schlitze 40 konstante Abstände zwischen den Schlitzen 40 bewirkt, sondern veränderliche Abstände.

Insbesondere ist eine weitere Verbesserung der Vergleichmäßigung und/oder Egalisierung bewirkbar, wenn statt der Mittelpunkte der Kreise die Brennpunkte der entsprechenden Ellipsen verwendet werden.

### Bezugszeichenliste

1 Rotorwelle
2 Kurzschlusskäfig
3 Blechpaket
40 Schlitz
41 Nut, insbesondere Stanznut, für Kurzschlussstab

## Patentansprüche

1. Elektromotor mit Rotorwelle (1), **Kurzschlusskäfig (2)** und Blechpaket (3),
wobei das Blechpaket (3) auf die Rotorwelle (1) aufgesteckt ist,
wobei das Blechpaket (3) an seinem auf die Drehachse der Rotorwelle (1) bezogen radial äußeren Umfang in Umfangsrichtung voneinander gleichmäßig beabstandete Nuten (41) zur Aufnahme von Kurzschlussstäben des einer Kurzschlusskäfigs (2) aufweist,
**wobei** das Blechpaket (3) zur Ausbildung von Reluktanzpolen in bezogen auf die Drehachse der Rotorwelle (1) in Umfangsrichtung voneinander regelmäßig beabstandete Schlitzgruppen aufweist,
wobei jede Schlitzgruppe mindestens drei Schlitze (40) aufweist,
wobei jeder Schlitz (40) kreisbogenförmig oder ellipsenbogenförmig ausgeführt ist,
wobei die Schlitze (40) einer jeweiligen Schlitzgruppe konzentrisch zueinander ausgerichtet sind,
wobei jeder Schlitz (40) an seinem jeweiligen entgegen der Umfangsrichtung oder in Umfangsrichtung angeordneten Ende von einer der Nuten (41) mit einem Minimalabstand beabstandet ist, wobei der Wert des Minimalabstandes für alle Enden aller Schlitze (40) derselbe Wert ist, insbesondere also identisch ist,
**dadurch gekennzeichnet, dass**
**der bezogen auf den Mittelpunkt, insbesondere Kreismittelpunkt, Ellipsenmittelpunkt oder Ellipsen-Brennpunkt, radiale Abstand zwischen jeweils zwei zueinander nächstbenachbarten Schlitzen (40) einer Schlitzgruppe mit zunehmendem Abstand zum Mittelpunkt, insbesondere Kreismittelpunkt, Ellipsenmittelpunkt oder Ellipsen-Brennpunkt, zunimmt,**
**wobei die auf den Mittelpunkt, insbesondere Kreismittelpunkt, Ellipsenmittelpunkt oder Ellipsen-Brennpunkt, bezogene radiale Ausdehnung des jeweiligen Schlitzes (40)**
- **in Umfangsrichtung um den Mittelpunkt, insbesondere Kreismittelpunkt, Ellipsenmittelpunkt oder Ellipsen-Brennpunkt, herum konstant ist und/**
- **unabhängig vom Umfangswinkel um den Mittelpunkt, insbesondere Kreismittelpunkt, Ellipsenmittelpunkt oder Ellipsen-Brennpunkt, herum** ist.

2. Elektromotor nach Anspruch 1,
**dadurch gekennzeichnet, dass**
die Anzahl der Schlitzgruppen vier beträgt.

3. Elektromotor nach einem der vorangegangenen Ansprüche,
**dadurch gekennzeichnet, dass**
bezogen auf den Mittelpunkt, insbesondere Kreismittelpunkt, Ellipsenmittelpunkt oder Ellipsen-Brennpunkt, des den jeweiligen Kreisbogen enthaltenden Kreises
jeder Schlitz (40) von einem ersten Kreisbogen radial innen berandet wird und von einem zweiten Kreisbogen radial außen berandet wird.

4. Elektromotor nach einem der vorangegangenen Ansprüche,
**dadurch gekennzeichnet, dass**
alle die Kreisbögen aller Schlitze (40) enthaltenden Kreise den identischen, Mittelpunkt, **nämlich Ellipsenmittelpunkt oder Ellipsen-Brennpunkt,** aufweisen, also konzentrisch zueinander angeordnet sind.

5. Elektromotor nach einem der vorangegangenen Ansprüche,
**dadurch gekennzeichnet, dass**
die auf den Mittelpunkt, insbesondere Kreismittelpunkt, Ellipsenmittelpunkt oder Ellipsen-Brennpunkt, bezogenen radiale Ausdehnung des jeweiligen Schlitzes (40) mit zunehmendem radialen Abstand vom Mittelpunkt, insbesondere Kreismittelpunkt, Ellipsenmittelpunkt oder Ellipsen-Brennpunkt, zunimmt.

6. Elektromotor nach einem der vorangegangenen Ansprüche,
**dadurch gekennzeichnet, dass**
der Kurzschlusskäfig (2) mit dem Blechpaket (3) als Verbundteil ausgebildet ist.

7. Elektromotor nach einem der vorangegangenen Ansprüche,
**dadurch gekennzeichnet, dass**
der Stator des Elektromotors eine Drehstromwicklung aufweist.

8. Elektromotor nach einem der vorangegangenen Ansprüche,
**dadurch gekennzeichnet, dass**
die Schlitzgruppen zueinander identisch ausgebildet sind, insbesondere also durch Drehung um die Drehachse der Rotorwelle (1) miteinander in Deckung bringbar sind.

9. Elektromotor nach einem der vorangegangenen Ansprüche,
**dadurch gekennzeichnet, dass**
die Schlitzgruppen denselben Radialabstand zur Drehachse der Rotorwelle (1) aufweisen.

## Claims

1. Electric motor comprising a rotor shaft (1), a squirrel cage (2) and a laminated core (3),
the laminated core (3) being mounted on the rotor shaft (1),
the laminated core (3) having, on its radially outer circumference in relation to the axis of rotation of the rotor shaft (1), grooves (41), which are uniformly spaced apart from one another in the circumferential direction, for receiving shorting bars of the squirrel cage (2), the laminated core (3) having slot groups, which are regularly spaced apart from one another in the circumferential direction in relation to the axis of rotation of the rotor shaft (1), for forming reluctance poles,
each slot group having at least three slots (40),
each slot (40) being configured in the shape of either a circle arc or an ellipse arc,
the slots (40) of a particular slot group being oriented concentrically with one another,
each slot (40), at its end arranged counter to the circumferential direction or in the circumferential direction, being spaced apart from one of the grooves (41) by a minimum distance, the value of the minimum distance being the same value, i.e. in particular being identical, for all the ends of all the slots (40),
**characterised in that**
the radial distance between each two closest neighbouring slots (40) of one slot group in relation to the centre point, in particular the circle centre point, the ellipse centre point or the ellipse focal point, increases as the distance from the centre point, in particular from the circle centre point, the ellipse centre point or the ellipse focal point, increases,
the radial extent of each slot (40) in relation to the centre point, in particular the circle centre point, the ellipse centre point or the ellipse focal point, being
- constant in the circumferential direction around the centre point, in particular the circle centre point, the ellipse centre point or the ellipse focal point, and being
- independent of the circumferential angle around the centre point, in particular the circle centre point, the ellipse centre point or the ellipse focal point.

2. Electric motor according to claim 1,
**characterised in that**
the number of slot groups is four.

3. Electric motor according to any of the preceding claims,
**characterised in that**
in relation to the centre point, in particular the circle centre point, the ellipse centre point or the ellipse focal point, of the circle containing the relevant circle arc, each slot (40) is radially internally bordered by a first circle arc and radially externally bordered by a second circle arc.

4. Electric motor according to any of the preceding claims,
**characterised in that**
all the circles containing the circle arcs of all the slots (40) have an identical centre point, specifically an identical ellipse centre point or ellipse focal point, i.e. are arranged concentrically with one another.

5. Electric motor according to any of the preceding claims,
**characterised in that**
the radial extent of each slot (40) in relation to the centre point, in particular the circle centre point, the ellipse centre point or the ellipse focal point, increases as the radial distance from the centre point, in particular from the circle centre point, the ellipse centre point or the ellipse focal point, increases.

6. Electric motor according to any of the preceding claims,
**characterised in that**
the squirrel cage (2) is formed as a composite part together with the laminated core (3).

7. Electric motor according to any of the preceding claims,
**characterised in that**
the stator of the electric motor has a three-phase winding.

8. Electric motor according to any of the preceding claims,
**characterised in that**
the slot groups are formed identically to one another, i.e. in particular can be made congruent with one another as a result of rotation about the axis of rotation of the rotor shaft (1).

9. Electric motor according to any of the preceding claims,
**characterised in that**
the slot groups are at the same radial distance from the axis of rotation of the rotor shaft (1).

## Revendications

1. Moteur électrique comportant arbre de rotor (1), cage à court-circuit (2) et paquet de tôles (3), le paquet de tôles (3) étant monté sur l'arbre de rotor (1),
le paquet de tôles (3) comportant, sur sa circonférence extérieure radiale par rapport à l'axe de rotation de l'arbre de rotor (1), des rainures (41) espacées uniformément les unes des autres dans la direction circonférentielle pour la réception de barres de court-circuit de la cage à court-circuit (2), le paquet de tôles (3) comportant, pour la formation de pôles de réluctance, des groupes de fentes régulièrement espacés les uns des autres dans la direction circonférentielle par rapport à l'axe de rotation de l'arbre de rotor (1), chaque groupe de fentes comportant au moins trois fentes (40),
chaque fente (40) étant réalisée en forme d'arc de cercle ou en forme d'arc d'ellipse, les fentes (40) d'un groupe de fentes respectif étant alignées concentriquement les unes par rapport aux autres, chaque fente (40) étant, à son extrémité respective disposée contre ou dans la direction circonférentielle, espacée d'une des rainures (41) par une distance minimale, la valeur de la distance minimale étant la même pour toutes les extrémités de toutes les fentes (40), en particulier donc identique,
**caractérisé en ce que** la distance radiale, par rapport au centre, en particulier centre de cercle, centre d'ellipse ou foyer d'ellipse, entre chaque deux fentes (40) adjacentes d'un groupe de fentes augmente avec l'augmentation de la distance au centre, en particulier centre de cercle, centre d'ellipse ou foyer d'ellipse,
-l'extension radiale de chaque fente (40) par rapport au centre, en particulier centre de cercle, centre d'ellipse ou foyer d'ellipse est constante dans la direction circonférentielle autour du centre, en particulier centre de cercle, centre d'ellipse ou foyer d'ellipse, et/ou
- est indépendante de l'angle circonférentiel autour du centre, en particulier centre de cercle, centre d'ellipse ou foyer d'ellipse.

2. Moteur électrique selon la revendication 1, **caractérisé en ce que** le nombre de groupes de fentes est de quatre.

3. Moteur électrique selon l'une des revendications précédentes, **caractérisé en ce que** par rapport au centre, en particulier centre de cercle, centre d'ellipse ou foyer d'ellipse, du cercle contenant l'arc de cercle respectif, chaque fente (40) est délimitée radialement à l'intérieur par un premier arc de cercle et radialement à l'extérieur par un second arc de cercle.

4. Moteur électrique selon l'une des revendications précédentes, **caractérisé en ce que** tous les cercles contenant les arcs de cercle de toutes les fentes (40) comportent le centre identique, à savoir centre d'ellipse ou foyer d'ellipse, donc sont disposés de manière concentrique les uns par rapport aux autres.

5. Moteur électrique selon l'une des revendications précédentes, **caractérisé en ce que** l'extension radiale de chaque fente (40) par rapport au centre, en particulier centre de cercle, centre d'ellipse ou foyer d'ellipse, augmente avec l'augmentation de la distance radiale au centre, en particulier centre de cercle, centre d'ellipse ou foyer d'ellipse.

6. Moteur électrique selon l'une des revendications précédentes, **caractérisé en ce que** la cage à court-circuit (2) est réalisée avec le paquet de tôles (3) comme pièce composite.

7. Moteur électrique selon l'une des revendications précédentes, **caractérisé en ce que** le stator du moteur électrique comporte un enroulement triphasé.

8. Moteur électrique selon l'une des revendications précédentes, **caractérisé en ce que** les groupes de fentes sont réalisés identiques les uns par rapport aux autres, en particulier donc peuvent être faits coïncider les uns avec les autres par rotation autour de l'axe de rotation de l'arbre de rotor (1).

9. Moteur électrique selon l'une des revendications précédentes, **caractérisé en ce que** les groupes de fentes comportent la même distance radiale à l'axe de rotation de l'arbre de rotor (1).
